# EUROPÄISCHE PATENTSCHRIFT

(11) **EP 3 005 643 B1**
(45) Veröffentlichungstag und Bekanntmachung des Hinweises auf die Patenterteilung: **19.07.2017**
(21) Anmeldenummer: 14725992.3
(22) Anmeldetag: 21.05.2014
(51) Int. Cl.: H04L 29/06, H04L 12/28, H04L 9/08, H04L 12/24, H04W 8/24, H04L 12/40

(54) **BASISMODUL FÜR EIN ELEKTRONISCHES GERÄT**
BASE MODULE FOR AN ELECTRONIC DEVICE
MODULE DE BASE POUR UN APPAREIL ÉLECTRONIQUE

(30) Priorität: 29.05.2013 DE 102013105516
(43) Veröffentlichungstag der Anmeldung: 13.04.2016
(73) Patentinhaber: Weidmüller Interface GmbH & Co. KG, 32758 Detmold (DE)
(72) Erfinder: WÖSTEN, Stefan, 32756 Detmold (DE)
(74) Vertreter: Specht, Peter
(86) Internationale Anmeldenummer: PCT/EP2014/060437
(87) Internationale Veröffentlichungsnummer: WO 2014/191276

(56) Entgegenhaltungen:
- WO-A2-2008/050815
- US-A1- 2007 087 778

## Beschreibung

Die Erfindung betrifft ein Basismodul für ein elektronisches Gerät zum Verbinden eines Anwendungsmoduls in dem elektronischen Gerät mit einem Netzwerk und ein derartiges elektronisches Gerät.

Aus der Druckschrift DE 44 38 806 C1 ist ein Feldbus-Anschlussmodul, auch Feldbus-Koppler genannt, bekannt, das mit Anwendungsmodulen in dem elektronischen Gerät verbunden wird, um diese mit einem als Feldbus ausgestalteten Netzwerk zu verbinden. Die Anwendungsmodule dienen beispielsweise der Ausgabe und/oder Erfassung von elektrischen Signalen. Ein solches Feldbus-Anschlussmodul ist ein Beispiel für das eingangs genannte Basismodul.

Ein solches Basismodul arbeitet üblicherweise programmgesteuert, wobei das Programm und Betriebsparameter des Programms oder sonstige Einstellungen des Basismoduls meist über das Netzwerk verwaltet, gewartet, aktualisiert und modifiziert werden können. Dabei kann das Basismodul gegenüber Änderungen durch ein Zugangspasswort geschützt sein. Auf diese Weise soll eine unbeabsichtigte oder nicht autorisierte Veränderung an dem Programm oder sonstigen Einstellungen verhindert werden.

Nachteilig an der Verwendung eines derartigen Zugangspassworts ist jedoch, dass, wenn das Zugangspasswort verloren geht, kein Zugriff mehr auf das Programm und die Einstellungen gegeben ist. Das Basismodul müsste dann beispielsweise zum Hersteller zurückgesendet werden, der dann ein neues Zugangspasswort setzen kann. Zwar könnte auch eine Art Masterpasswort verwendet werden, hier stellt sich jedoch ein Sicherheitsproblem, denn wenn das Masterpasswort ungewollt bekannt wird, dann kann das Zugangspasswort über das Netzwerk in nicht autorisierter Weise verändert werden.

Die Druckschrift WO 2008/050815 A2 beschreibt ein Verfahren zum Einstellen von Zugangsdaten eines elektronischen Geräts zu einem Funknetzwerk, beispielsweise einem WLAN (Wireless Local Area Network). Die Zugangsdaten werden dabei von einer übergeordneten Steuereinrichtung im Netzwerk, z.B. einem Computer, an das Gerät übermittelt und dort eingestellt, wenn sowohl an der Steuereinrichtung, als auch dem Gerät selbst ein Einstellungsknopf manuell betätigt wird. Die Zugangsdaten können somit nur eingestellt werden, wenn das elektronische Gerät auch manuell erreichbar ist. Nachteilig ist jedoch, dass ein separater Einstellknopf am elektronischen Gerät vorzusehen ist.

Es ist eine Aufgabe der Erfindung, das bekannte Basismodul mit einem verbesserten Zugangsschutz zu versehen.

Die Aufgabe wird durch ein Basismodul der eingangs genannten Art und ein elektrisches Gerät mit den Merkmalen der unabhängigen Ansprüche gelöst. Bevorzugte Weiterbildungen sind Gegenstand der abhängigen Ansprüche.

Gemäß einem Aspekt der Erfindung umfasst ein derartiges Basismodul für ein elektronisches Gerät zum Verbinden eines Anwendungsmoduls in dem elektronischen Gerät mit einem Netzwerk, ein in einem Speicher hinterlegtes Programm, das eine Funktionalität des elektronischen Gerätes definiert, sowie eine Änderungseinrichtung zum Ändern von Einstellungen an dem im Speicher hinterlegten Programm basierend auf einer Benutzereingabe, wobei zur Änderung wenigstens eines Teil der Einstellungen ein vorbestimmter elektrischer Schaltzustand für das Basismodul notwendig ist. Das Basismodul zeichnet sich dadurch aus, dass der vorbestimmte elektrische Schaltzustand eine getrennte elektrische Verbindung zum Anwendungsmodul umfasst. Auf diese Weise muss das angegebene Basismodul beispielsweise zum Verstellen des Zugangspassworts zwingend von den Anwendungsmodulen getrennt werden. Eine unbeabsichtigte Änderung des Programms, sonstiger Einstellungen oder des Zugangspassworts (beispielsweise über das Netzwerk) ist so während des Betriebs des elektronischen Geräts ausgeschlossen.

Das Ändern bestimmter Teile des im Speicher hinterlegten Programms wird nur im Rahmen des bestimmten elektrischen Schaltzustandes zugelassen. Gegenüber einem elektronischen Schaltzustand, der die Informationszustände innerhalb des angegebenen Basismoduls beschreibt, beschreibt ein elektrischer Schaltzustand die elektrischen Energieübertragungszustände zum oder innerhalb des Basismoduls. Im Rahmen eines elektrischen Schaltzustandes werden daher elektrische Verbindungen zum Basismodul oder elektrische Verbindungen innerhalb des Basismoduls gezielt unterbrochen oder hergestellt.

Auf diese Weise kann beispielsweise der das Zugangspasswort beschreibende Teil des im Speicher hinterlegten Programms wirksam vor einem unbefugten Zugriff geschützt werden, denn eine Veränderung des Zugangspassworts ist nur direkt vor Ort am Basismodul möglich. Jedoch können mit dem angegebenen Basismodul auch andere Programmteile in der gleichen Weise geschützt, die nicht über das Netzwerk zugänglich veränderbar sein sollen.

In einer weiteren vorteilhaften Ausgestaltung des angegebenen Basismoduls umfasst die elektrische Verbindung eine Datenverbindung. Auf diese Weise ist informationstechnisch in einfacher Weise bestimmbar, ob der vorbestimmte elektrische Schaltzustand erreicht ist, der zum Verstellen der zuvor genannten Programmeinstellungen, beispielsweise mit dem Zugangspasswort, erreicht ist.

In weiteren vorteilhaften Ausgestaltung des angegebenen Basismoduls umfassen die im vorbestimmten elektrischen Schaltzustand änderbaren Einstellungen das zuvor genannte Zugangspasswort, mit dem ein Zugang zu Parametern und Programmstrukturen an dem im Speicher hinterlegten Programm gesichert ist. Durch das angegebene Basismodul ist das Zugangspasswort in einer einfachen und überschaubaren Weise geschützt, weil es keinen Zugang auf das Zugangspasswort von außen, beispielsweise über das Netzwerk gibt.

Gemäß einem weiteren Aspekt der Erfindung umfasst ein elektronisches Gerät ein angegebenes Basismodul und ein Anwendungsmodul, das über das Basismodul an ein Netzwerk anschließbar ist.

In einer vorteilhaften Ausgestaltung des angegebenen elektronischen Gerätes ist das Anwendungsmodul mit dem Basismodul elektrisch, optisch und/oder mechanisch verbunden.

In einer weiteren vorteilhaften Ausgestaltung des angegebenen elektronischen Gerätes ist das Netzwerk ein Feldbus.

In einer weiteren vorteilhaften Ausgestaltung des angegebenen elektronischen Gerätes umfasst das Anwendungsmodul einen Sensor, einen Aktor oder ein Feldgerät, das Teil eines Produktionsprozesses ist.

Die Erfindung wird nachfolgend anhand von Ausführungsbeispielen mithilfe von Figuren näher erläutert. Die Figuren zeigen:
- Fig. 1: eine Prinzipdarstellung eines Netzwerks mit Basismodule aufweisenden elektronischen Geräten, und
- Fig. 2: eine Prinzipdarstellung des Netzwerks aus Fig. 1 in einem anderen Betriebszustand.

In den Figuren werden gleiche oder gleich wirkende technische Elemente mit gleichen Bezugszeichen versehen und nur einmal beschrieben.

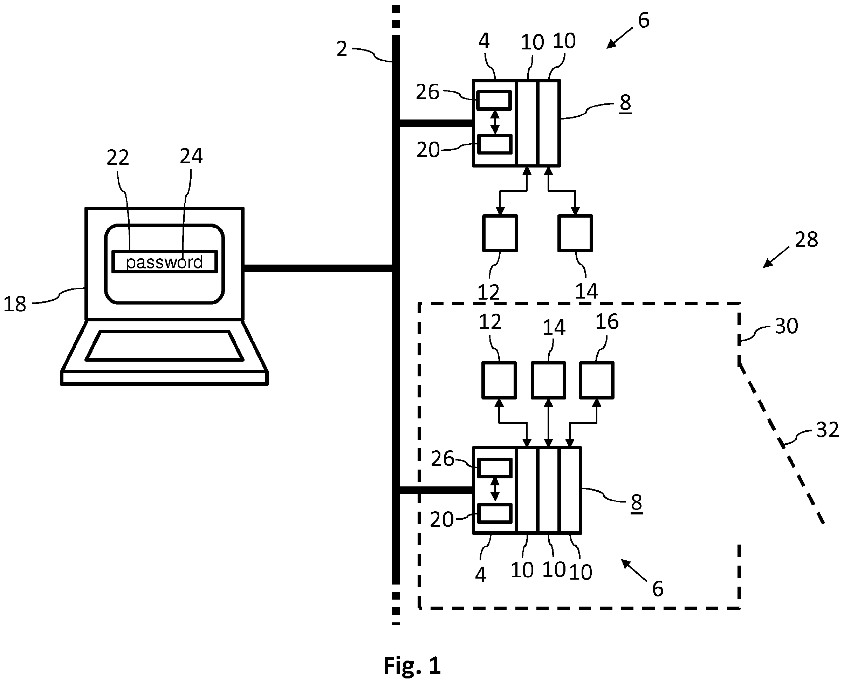

Es wird auf Fig. 1 Bezug genommen, die eine Prinzipdarstellung eines Netzwerks 2 mit einem Basismodul 4 aufweisenden elektronischen Geräten 6 zeigt.

Das Netzwerk 2 kann in der vorliegenden Ausführung beispielsweise ein an sich bekannter Feldbus sein, der in einem Industriebetrieb unterhalb einer Leitebene zur Vorgabe von Führungsgrößen Sensoren und Aktoren zu Regelkreisen zusammenschließt. Derartige Feldbusse, wie beispielsweise CAN-open (controller area network), PROFIBUS, PROFINET und EtherCAT, sind bekannt und sollen nachstehend nicht weiter beschrieben werden.

Die einzelnen elektronischen Geräte 6 können nach Art eines modularen Steuerungssystems aufgebaut sein, wie es beispielsweise aus der DE 44 38 806 C1 bekannt ist. Im Rahmen dieses Aufbaus können die einzelnen elektronischen Geräte das jeweilige Basismodul 4 umfassen, das im Rahmen einer Automatisierungssteuerung auch als Feldbuskoppler bezeichnet wird.

Über die einzelnen Basismodule 4 können Anwendungsmodule 8 an das Netzwerk 2 angeschlossen sein. Die einzelnen Anwendungsmodule 8 sind aus Signalleiterscheiben 10 und nicht weiter dargestellten Versorgungsscheiben aufgebaut, über die Sensoren 12, Aktoren 14 und andere Feldgeräte 16 angesteuert werden können.

Die elektronischen Geräte 6 können in der vorliegenden Ausführung von einem übergeordneten Leitrechner 18, auch Steuerungsrechner oder SpeicherProgrammierbare-Steuerung genannt, angesteuert werden, um beispielsweise die zuvor genannten Führungsgrößen zu empfangen.

Über diesen Leitrechner 18 können in der vorliegenden Ausführung auch Programmierarbeiten an den Basismodulen 4 durchgeführt werden. Dabei können über den Leitrechner 18 in einen Speicher 20 der einzelnen Basismodule 4 Programme eingespielt, verändert oder gelöscht werden, die die Funktionalität des Basismoduls 4 oder des gesamten elektronischen Geräts 6 beschreiben.

Um zu vermeiden, dass die Programme in den Speichern 20 der Basismodule 4 der elektronischen Geräte 6 nicht versehentlich verändert werden, ist in der vorliegenden Ausführung vor der Veränderung der Programme 20 in den Speichern 20 der Basismodule 4 der elektronischen Geräte 6 die Eingabe 22 eines Zugangspasswortes 24 vorgesehen. Erst danach können die zuvor genannten programmatischen Änderungen in den elektronischen Geräten vorgenommen werden.

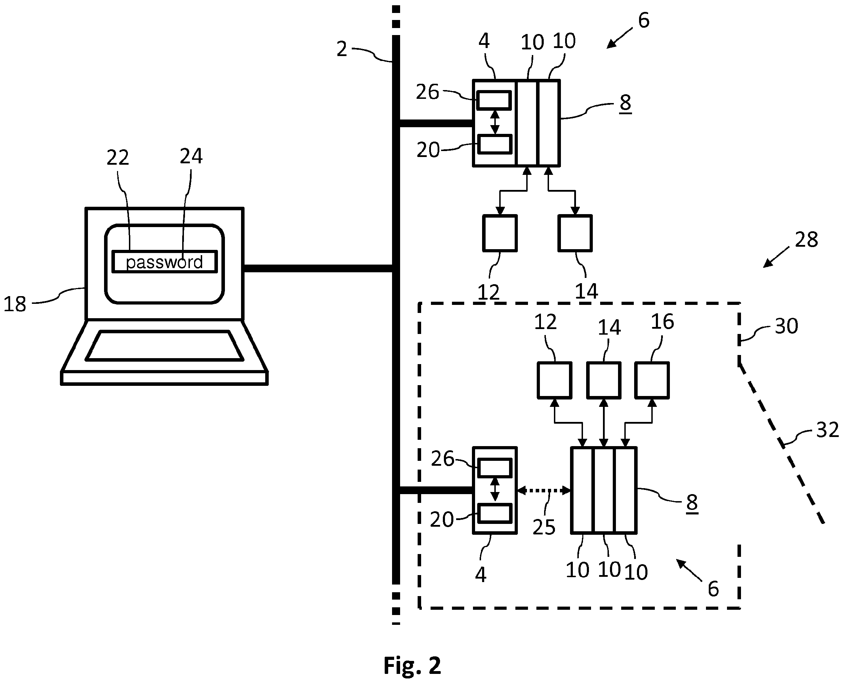

Kommt dieses Zugangspasswort 24 jedoch abhanden, weil der Anwender es beispielsweise vergisst, so kann das Zugangspasswort 24 in der vorliegenden Ausführung über den Leitrechner 18 zurückgesetzt werden. Anwender müssen jedoch zunächst das entsprechende elektronische Gerät 6 in einen besonderen elektrischen Zustand versetzten, der in Fig. 2 beispielhaft anhand des in der Figur unten dargestellten elektronischen Gerätes 6 gezeigt ist.

Wie in Fig. 2 zu sehen ist, ist das Basismodul 4 in diesem besonderen elektrischen Zustand vom Anwendungsmodul 8 elektrisch getrennt. Diese elektrische Trennung 25 umfasst in der vorliegenden Ausführung die elektrische Trennung 25 aller informationsführenden Leitungen und optional auch die elektrische Trennung aller elektrischen Energieversorgungsleitungen zwischen dem Basismodul 4 und dem Anwendungsmodul 8.

Die einzelnen elektronischen Geräte 6 können dazu beispielsweise je eine Änderungseinrichtung 26 umfassen, die die elektrische Trennung 25 zwischen dem Basismodul 4 und dem Anwendungsmodul 8 erfasst und erst nach der erfassten elektrischen Trennung 25 den Zugriff auf einen Speicherbereich in dem Speicher 20 freigibt, der die Änderung des Zugangspassworts 24 beispielsweise über dem Leitrechner 18 erlaubt.

Alternativ könnte die Änderungseinrichtung 26 jedoch auch eine eigene Eingabeeinrichtung umfassen, mit der Zugangspasswort 24 geändert werden kann. Auf diese Weise müsste der Anwender gerade bei großen räumlichen Distanzen zwischen dem Leitrechner 18 und dem elektronischen Gerät 6, an dem das Zugangspasswort zurückzusetzen ist, nicht hin- und herlaufen.

Um die Sicherheit gegenüber unerlaubten Manipulationen zu erhöhen, können einzelne elektronische Geräte 6 oder alle elektronischen Geräte 6 in einem abschließbaren Schaltschrank 28 untergebracht sein, der in Fig. 1 und 2 der Einfachheit halber durch ein gestricheltes Rechteck angedeutet ist. Der Schaltschrank 28 weist dabei ein Schrankgehäuse 30 auf, in dessen Innerem das oder die entsprechenden elektronischen Geräte 6 aufgenommen sind. Mit einer abschließbaren Tür 32 kann das Schrankgehäuse 30 dann gegen einen unberechtigten Zugriff gesichert werden.

Dabei kann an der Tür 32 ein Türschalter vorgesehen sein, der mit dem elektronischen Gerät 6 verbunden ist und mittels eines Schaltkontakts eine geöffnete Tür signalisiert. Der Schaltzustand des Schaltkontakts wird dann als der vorbestimmte Schaltzustand 25 angesehen, der Voraussetzung ist, um beispielsweise das Zugangspasswort 24 zu verändern.

### Bezugszeichenliste

- 2: Netzwerk
- 4: Basismodul
- 6: elektronische Geräte
- 8: Anwendungsmodul
- 10: Signalleiterscheiben
- 12: Sensoren
- 14: Aktoren
- 16: Feldgeräte
- 18: Leitrechner
- 20: Speicher
- 22: Benutzereingabe
- 24: Zugangspasswort
- 25: Schaltzustand
- 26: Änderungseinrichtung
- 28: Schaltschrank
- 30: Schrankgehäuse
- 32: Tür

## Patentansprüche

1. Basismodul (4) für ein elektronisches Gerät (6) zum Verbinden eines Anwendungsmoduls (8) in dem elektronischen Gerät (6) mit einem Netzwerk (2), umfassend ein in einem Speicher (20) hinterlegtes Programm, das eine Funktionalität des elektronischen Gerätes (6) definiert, und eine Änderungseinrichtung (26) zum Ändern von Einstellungen an dem im Speicher (20) hinterlegten Programm basierend auf einer Benutzereingabe (22), wobei zur Änderung wenigstens eines Teil der Einstellungen ein vorbestimmter elektrischer Schaltzustand (25) für das Basismodul (4) notwendig ist, **dadurch gekennzeichnet, dass** der vorbestimmte elektrische Schaltzustand (25) eine getrennte elektrische Verbindung zum Anwendungsmodul (8) umfasst.

2. Basismodul (4) nach Anspruch 1, wobei die elektrische Verbindung eine Datenverbindung umfasst.

3. Basismodul (4) nach Anspruch 1 oder 2, wobei die im vorbestimmten elektrischen Schaltzustand (25) änderbaren Einstellungen ein Zugangspasswort (24) umfassen, mit dem ein Zugang zu Parametern und Programmstrukturen an dem im Speicher (20) hinterlegten Programm gesichert ist.

4. Elektronisches Gerät (6) umfassend ein Basismodul (4) nach einem der vorstehenden Ansprüche und ein Anwendungsmodul (8), das über das Basismodul (4) an ein Netzwerk (2) anschließbar ist.

5. Elektronisches Gerät (6) nach Anspruch 4, wobei das Anwendungsmodul (8) mit dem Basismodul (4) elektrisch, optisch und/oder mechanisch verbunden ist.

6. Elektronisches Gerät (6) nach Anspruch 4 oder 5, wobei das Netzwerk (2) ein Feldbus ist.

7. Elektronisches Gerät (6) nach einem der Ansprüche 4 bis 6, wobei das Anwendungsmodul (8) zum, Anschluss eines Sensor (12), eines Aktors (14) oder eines sonstigen Feldgeräts (16) eingerichtet ist.

## Claims

1. A base module (4) for an electronic device (6) for connecting an application module (8) in the electronic device (6) to a network (2), comprising a program which is stored in a memory unit (20) and which defines a functionality of the electronic device (6) and comprising a modification device (26) for modifying settings on the program stored in the memory unit (20) on the basis of a user input (22), wherein to modify at least some of the settings a specified electric switch state (25) for the base module (4) is required, **characterized in that** the specified electric switch state (25) comprises a separate electrical connection to the application module (8).

2. The base module (4) according to claim 1, wherein the electrical connection comprises a data connection.

3. The base module (4) according to claim 1 or 2, wherein the settings which can be changed in the specified electrical switch state (25) include an access password (24), which secures access to parameters and program structures to the program which is stored in the memory unit (20).

4. An electronic device (6) comprising a base module (4) according to one of the preceding claims and an application module (8), which can be connected to a network (2) via the base module (4).

5. The electronic device (6) according to claim 4, wherein the application module (8) is connected with the base module (4) electrically, optically and/or mechanically.

6. The electronic device (6) according to claim 4 or 5, wherein the network (2) is a field bus.

7. The electronic device (6) according to one of the claims 4 to 6, wherein the application module (8) is set up to connect a sensor (12), an actuator (14) or any other field device (16).

## Revendications

1. Module de base (4) pour un appareil électronique (6) destiné à la connexion d'un module d'application (8) de l'appareil électronique (6) à un réseau (2), comprenant un programme enregistré dans une mémoire (20) qui définit une fonction de l'appareil électronique (6) et un dispositif de modification (26) pour modifier des réglages du programme enregistré dans la mémoire (20) sur la base d'une saisie par un utilisateur (22), dans lequel un état de commutation électrique prédéterminé (25) du module de base (4) est nécessaire pour la modification d'au moins une partie des réglages, **caractérisé en ce que** l'état de commutation électrique prédéterminé (25) comprend une connexion électrique séparée au module d'application (8).

2. Module de base (4) selon la revendication 1, dans lequel la connexion électrique comprend une connexion de données.

3. Module de base (4) selon la revendication 1 ou 2, dans lequel les réglages pouvant être modifiés dans l'état de commutation électrique prédéterminé (25) comprennent un mot de passe d'accès (24) avec lequel un accès à des paramètres et des structures de programme du programme enregistré dans la mémoire (20) est assuré.

4. Appareil électronique (6) comprenant un module de base (4) selon l'une des revendications précédentes et un module d'application (8) qui peut être connecté à un réseau (2) par l'intermédiaire du module de base (4).

5. Appareil électronique (6) selon la revendication 4, dans lequel le module d'application (8) est connecté électriquement, optiquement et/ou mécaniquement avec le module de base (4).

6. Appareil électronique (6) selon la revendication 4 ou 5, dans lequel le réseau (2) est un bus de terrain.

7. Appareil électronique (6) selon l'une des revendications 4 à 6, dans lequel le module d'application (8) est aménagé pour le branchement d'un capteur (12), d'un actionneur (14) ou d'un autre appareil de terrain (16).
